# EUROPÄISCHE PATENTANMELDUNG

(11) **EP 4 424 854 A1**
(43) Veröffentlichungstag der Anmeldung: **04.09.2024**
(21) Anmeldenummer: 23158969.8
(22) Anmeldetag: 28.02.2023
(51) Int. Cl.: C22B 7/00, C01F 7/0646, C01F 7/0653, C22B 21/00, C01F 7/066

(54) **VERFAHREN ZUR WERTSTOFFGEWINNUNG AUS EINEM BAUXITRÜCKSTAND**

(71) Anmelder: ERMAFA Environmental Technologies GmbH, 1110 Wien (AT)
(72) Erfinder: KAPAUN, Wolfgang, 1110 Wien (AT)
(74) Vertreter: SONN Patentanwälte GmbH & Co KG

(57) **Zusammenfassung**

Die vorliegende Erfindung betrifft ein Verfahren zur Wertstoffgewinnung aus einem Bauxitrückstand, das Verfahren umfassend die folgenden Schritte:
a) Bereitstellen einer wässrigen Suspension des Bauxitrückstands;
b) Einstellen eines pH-Werts der wässrigen Suspension auf einen Wert zwischen 7,2 und 12,2;
c) zumindest teilweises Desagglomerieren suspendierter Mineralagglomerate des Bauxitrückstands; und
d) Auftrennen des resultierenden Gemischs in eine eisenreiche Fraktion und in wenigstens eine weitere, vorzugsweise silikatreiche Fraktion,
wobei der wässrigen Suspension wenigstens ein Flockungsmittel zugegeben wird, wobei das wenigstens eine Flockungsmittel Stärke umfasst.

## Beschreibung

Die vorliegende Erfindung betrifft Verfahren zur Wertstoffgewinnung aus einem Bauxitrückstand.

Aluminium wird großtechnisch aus Bauxit nach dem Bayer-Verfahren gewonnen. Bauxit enthält typischerweise nur 30 bis 60 % Aluminiumoxid, der Rest ist ein Gemisch, das unter anderem Eisenoxide und Silikate enthält. Im Rahmen des Bayer-Verfahrens wird aus Bauxit ausreichend reines Aluminiumoxid abgetrennt.

In einem üblichen Ablauf des Bayer-Verfahrens wird das Bauxit fein zermahlen und mit Natronlauge gemischt. Diese Mischung wird in Autoklaven unter Druck und hohen Temperaturen gerührt, wodurch die Natronlauge das Aluminiumoxid aus dem Bauxit löst, indem sie sich mit ihr zu Natriumaluminat verbindet. Die nicht gelösten Bauxitbestandteile bilden den sogenannten Bauxitrückstand. Der Bauxitrückstand wird abgetrennt und das Aluminiumoxid kann durch Ausrühren, Kalzinieren und andere Schritte weiterverarbeitet werden, um reines Aluminium zu gewinnen.

Der beim Bayer-Verfahren anfallende Bauxitrückstand (auch "Bauxite Residue", "BR") wird auch als "Rotschlamm" bezeichnet. Diese Bezeichnung kommt von der durch die Eisenverbindungen hervorgerufene rote Farbe. Der Bauxitrückstand stellt ein enormes Entsorgungsproblem dar. Nach einigen Quellen fallen weltweit rund 150 Millionen Tonnen Bauxitrückstand pro Jahr als Abfallprodukt an. Oft wird der Bauxitrückstand in großen Deponien bzw. "Rotschlamm-Becken" gelagert, in einigen Ländern aber auch einfach in die Flüsse geleitet. Der Bauxitrückstand stellt ein Umweltproblem von außerordentlichem Ausmaß dar.

Es gibt daher Bestreben, den bislang als Abfallprodukt betrachteten Bauxitrückstand in nutzbare Werkstoffe zu überführen. Ziel ist insbesondere die Abtrennung der Eisenbestandteile, die einen großen Anteil des Bauxitrückstands ausmachen können.

Ein Verfahren zur Wertstoffgewinnung aus einem Bauxitrückstand, insbesondere zur Abtrennung von eisenhaltigen Bestandteilen, ist aus der EP 2 836 462 B1 bekannt. Dabei soll die nasschemische Abtrennung wenigstens eines Teils der eisenhaltigen Bestandteile des Bauxitrückstands durch ein Verfahren ermöglicht werden, welches die folgenden Schritte umfasst: Bereitstellen einer wässrigen Suspension des Bauxitrückstands; Einstellen eines pH-Werts der Suspension auf einen Wert zwischen 7,2 und 12,2 und Zugeben wenigstens eines Dispergiermittels; zumindest teilweises Desagglomerieren suspendierter Mineralagglomerate des Bauxitrückstands durch Erzeugung von Kavitation; und Auftrennen des resultierenden Gemischs in eine eisenreiche Fraktion und in wenigstens eine weitere, vorzugsweise silikatreiche Fraktion.

Trotz dieser und weiterer im Stand der Technik bekannter Verfahren ist das Problem der Wertstoffgewinnung aus Bauxit-Rückstand noch nicht zufriedenstellend gelöst. Es besteht weiterhin ein Bedarf an besseren Verfahren, welche beispielsweise eine höhere Ausbeute, eine höhere Effizienz und/oder einen höheren Durchsatz ermöglichen. Insbesondere besteht auch ein Bedarf an günstigeren und umweltschonenderen Verfahren, die in möglichst großem Maßstab durchgeführt werden können.

Es ist eine Aufgabe der vorliegenden Erfindung, solche Verfahren zur Verfügung zu stellen.

Daher betrifft die Erfindung ein Verfahren zur Wertstoffgewinnung aus einem Bauxitrückstand, das Verfahren umfassend die folgenden Schritte:
a) Bereitstellen einer wässrigen Suspension des Bauxitrückstands;
b) Einstellen eines pH-Werts der wässrigen Suspension auf einen Wert zwischen 7,2 und 12,2;
c) zumindest teilweises Desagglomerieren suspendierter Mineralagglomerate des Bauxitrückstands; und
d) Auftrennen des resultierenden Gemischs in eine eisenreiche Fraktion und in wenigstens eine weitere, vorzugsweise silikatreiche Fraktion,
wobei der wässrigen Suspension vorzugsweise wenigstens ein Flockungsmittel zugegeben wird, wobei das wenigstens eine Flockungsmittel Stärke umfasst.

Bei den im Bauxitrückstand enthaltenen Mineralagglomeraten handelt es sich um agglomerierte Partikel, welche vorzugsweise unter anderem Eisenoxide und Silikate umfassen. Die Partikel sind üblicherweise durch elektrostatische und sterische Bindungskräfte miteinander verbunden. In dem in der EP 2 836 462 B1 offenbarten Verfahren sollen die Bindungskräfte zwischen den agglomerierten Mineralbestandteilen zumindest teilweise aufgehoben werden, um eine Desagglomeration zu ermöglichen. Dazu sollen die Oberflächenladungen der mineralischen Partikel durch Einstellen des pH-Werts im Bereich des isoelektrischen Punkts bzw. des Point of Zero Charge (PZC) möglichst ausgeglichen werden. Gemäß EP 2 836 462 B1 ist weiters vorgesehen, dass der Suspension ein Dispergiermittel zugesetzt wird, welches die durch die Desagglomeration erreichte Partikelisolation stabilisieren bzw. aufrechterhalten soll. Dies soll einmal freigesetzte Partikel an der Reagglomerierung mit unerwünschten anderen Partikeln hindern und die Desagglomeration unterstützen. Die Desagglomeration soll dann durch Erzeugung von Kavitation erfolgen, d.h. durch die Bildung und Auflösung von dampfgefüllten Hohlräumen (Dampfblasen) im Suspensionsmittel des Bauxitrückstands, z.B. durch einen Dissolver-Rührer oder durch Beaufschlagung mit Ultraschall. Anschließend sollen eine eisenreiche Fraktion und eine silikatreiche Fraktion getrennt werden.

Die EP 2 836 462 B1 weist darauf hin, dass keine zusätzlichen Hilfsstoffe wie Flockungsmittel oder dergleichen benötigt werden. Dies ist grundsätzlich vorteilhaft, da es sich bei Flockungsmitteln häufig um umwelttechnisch problematische und teilweise auch teure Stoffe handeln kann.

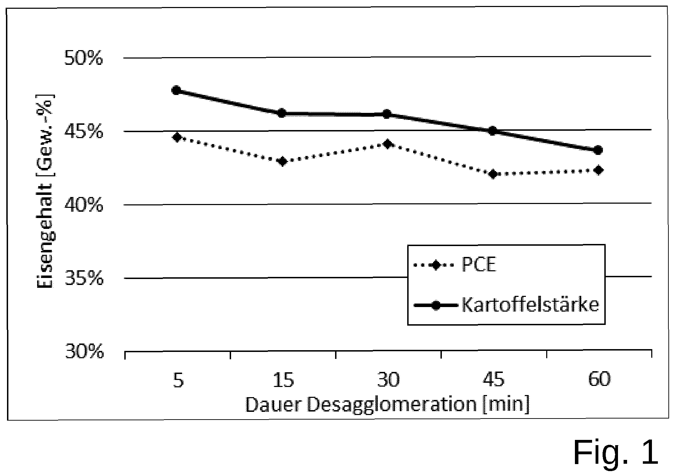

Im Rahmen der vorliegenden Erfindung hat es sich nun aber überraschenderweise herausgestellt, dass Stärke - welche weder teuer noch umweltschädlich ist - als Flockungsmittel eingesetzt werden kann und dass damit noch eine erhebliche Verbesserung des Prozesses erreicht werden kann. Ohne an eine Theorie gebunden zu sein, vermuten die Erfinder, dass das Flockungsmittel es ermöglicht, die Eisenpartikel in der Suspension schneller und/oder reiner einzufangen und zu agglomerieren. Die agglomerierten Eisenpartikel können dann in Form der eisenreichen Fraktion abgetrennt werden. Stärke ist dabei nicht nur günstig und in großen Mengen verfügbar, sondern belastet die Umwelt auch nicht. Zusätzlich hat sich völlig überraschend gezeigt, dass Stärke als Flockungsmittel im Rahmen des erfindungsgemäßen Verfahrens erstaunlich gut funktioniert und sogar zu besseren Ergebnissen führt als übliche chemische Flockungsmittel, wie etwa der umwelttechnisch viel problematischere Polycarboxylatester (PCE). Die Verwendung von PCE ist weit verbreitet, aufgrund seiner Schädlichkeit für Wasserorganismen darf es jedoch nicht in die Kanalisation oder in Oberflächengewässer gelangen. Im Rahmen der Erfindung hat sich nun gezeigt, dass Stärke PCE als Flockungsmittel nicht nur gleichwertig ersetzen kann, sondern sogar noch bessere Resultate liefert. So konnte mit Kartoffelstärke ein um ungefähr 3 Prozentpunkte höherer Eisengehalt in der eisenreichen Fraktion erreicht werden als mit PCE - dies entspricht einer relativen Steigerung von ca. 7 Prozent (vgl. Beispiel 2 und Fig. 1). In Anbetracht der enormen Mengen an zu behandelndem Bauxitrückstand und der großen Maßstäbe, in denen ein solches Verfahren durchgeführt werden soll, stellt eine solche Steigerung einen veritablen Sprung dar, der eine wesentliche Auswirkung auf die Wirtschaftlichkeit des Verfahrens hat. Dass dieser Sprung mit einem für die Umwelt unproblematischen Mittel erreicht werden kann, öffnet der Aufbereitung von Bauxitrückstand neue Perspektiven und könnte ein wesentlicher Schritt zur Lösung dieses großen Umweltproblems sein.

Unabhängig von der Verwendung von Stärke als Flockungsmittel hat sich im Rahmen der Erfindung eine weitere überraschende Verbesserung des Verfahrens gemäß EP 2 836 462 B1 ergeben. So hat sich unerwarteterweise gezeigt, dass es auch ohne Verwendung von Stärke als Flockungsmittel vorteilhaft ist, die Desagglomeration der suspendierten Mineralpartikel des Bauxitrückstands ohne Kavitation durchzuführen. Vergleichsversuche haben gezeigt, dass eine Desagglomeration mit einem Inline Dispergierer, welcher keine Kavitation verursacht, zu einem höheren Eisengehalt in der eisenreichen Fraktion führt, als wenn die Desagglomeration mit Kavitation durch ein Zahnscheiben-System durchgeführt wird (vgl. Beispiel 4). Zusätzlich und davon unabhängig ermöglicht ein Inline Dispergierer es auch noch, die Dispergierzeit zu verkürzen, wodurch - ebenfalls unerwartet - ein noch höherer Eisengehalt erreicht werden kann. Gleichzeitig ermöglicht es dies, die Gesamtzeit des Prozesses sowie den Durchsatz wesentlich zu erhöhen.

Schließlich hat sich herausgestellt, dass im erfindungsgemäßen Prozess - d.h. unter Verwendung von Stärke als Flockungsmittel und/oder bei Desagglomeration mit einem Inline Dispergierer - vollständig auf das in der EP 2 836 462 B1 vorgesehene Dispergiermittel, welches der Bauxitrückstand-Suspension zugegeben werden soll, verzichtet werden kann. Dies erhöht wiederum die Wirtschaftlichkeit des Prozesses und reduziert gleichzeitig die Umweltbelastung, die mit umwelttechnisch problematischen Dispergiermitteln einhergehen kann.

Abgesehen von den oben erwähnten Unterschieden kann das erfindungsgemäße Verfahren so durchgeführt werden, wie in der EP 2 836 462 B1 beschrieben. Der Inhalt der EP 2 836 462 B1 wird daher hiermit in die vorliegende Anmeldung aufgenommen. Insbesondere können die Schritte a) Bereitstellen einer wässrigen Suspension des Bauxitrückstands; b) Einstellen eines pH-Werts der Suspension auf einen Wert zwischen 7,2 und 12,2; c) zumindest teilweises Desagglomerieren suspendierter Mineralagglomerate des Bauxitrückstands; und d) Auftrennen des resultierenden Gemischs in eine eisenreiche Fraktion und in wenigstens eine weitere, vorzugsweise silikatreiche Fraktion; so durchgeführt werden, wie in der EP 2 836 462 B1 beschrieben.

Im Zusammenhang mit der Erfindung ist der Bauxitrückstand vorzugsweise durch das Bayer-Verfahren erhältlich oder erhalten. Es kann sich dabei um Bauxitrückstand handeln, der aus einer Deponie stammt. So können bestehende Deponien abgebaut und verwertet werden. Der Bauxitrückstand kann aber auch unmittelbar aus einem Bayer-Verfahren stammen. Das erfindungsgemäße Verfahren kann daher unmittelbar im Anschluss an das Bayer-Verfahren durchgeführt werden, wobei in Schritt a) des Verfahrens der im Bayer-Verfahren anfallende Bauxitrückstand mit Wasser vermischt wird, um die wässrige Suspension des Bauxitrückstands bereitzustellen.

Das erfindungsgemäße Verfahren umfasst die Schritte a) bis d) wie oben beschrieben. Vorzugsweise werden die Schritte des Verfahrens in der angegebenen Reihenfolge durchgeführt. In einer bevorzugten Ausführungsform besteht das Verfahren aus den Schritten a) bis d).

Im Rahmen von Schritt a) des erfindungsgemäßen Verfahrens kann der Bauxitrückstand mit Wasser vermischt werden, um die wässrige Suspension des Bauxitrückstands zu erhalten. Vorzugsweise wird der Bauxitrückstand dabei mit Wasser homogenisiert.

Die Homogenisierung kann in einem Homogenisier-Behälter erfolgen. Vorzugsweise ist der Homogenisier-Behälter beheizbar, beispielsweise über einen Doppelmantel. Zur Homogenisierung kann ein Rührwerk eingesetzt werden. Die Homogenisierung kann auch durch einen Inline Dispergierer erfolgen. Die Suspension kann zur Homogenisierung dabei zwischen dem Inline Dispergierer und dem Homogenisier-Behälter zirkulieren, wobei der Inline Dispergierer die Möglichkeit besitzen kann umzuschalten und die Suspension in den nächsten Prozess-Schritt zu pumpen.

Der Homogenisier-Behälter ist vorzugsweise ein offener Behälter. Wasser zur Verdünnung kann in den Homogenisier-Behälter zugeführt werden, vorzugsweise auch Prozesswasser, welches von der silikatreichen Fraktion abgeschieden wird. Bauxitrückstand kann aus einem Volagebehälter unter Rühren (bzw. im Falle eines Inline-Dispergierers unter ständigem im Kreis pumpen) zugegeben werden.

Die wässrige Suspension des Bauxitrückstands wird in Schritt b) auf einen pH-Wert zwischen 7,2 und 12,2 eingestellt.

Vorzugsweise wird der pH-Wert in Schritt b) durch Zugabe einer Säure eingestellt. Besonders bevorzugt ist dabei Zitronensäure. Zitronensäure hat unter anderem den Vorteil, dass sie umwelttechnisch unproblematisch ist.

In einer bevorzugten Ausführungsform wird die Säure, insbesondere die Zitronensäure, in einer Menge im Bereich von 0,25 bis 2 Gew.-% bezogen auf den Trockensubstanz-Gehalt der wässrigen Suspension zugegeben.

Die Säure kann vorteilhafterweise flüssig über eine Dosierpumpe aus einem Vorratsbehälter zugegeben werden. Die Menge der zugegebenen Säure kann über pH-Wert Messungen der Suspension sichergestellt werden.

Es hat sich als vorteilhaft herausgestellt, wenn in Schritt b) auch die Temperatur der Suspension auf einen bestimmten Bereich eingestellt wird. Besonders vorteilhaft ist es dabei, wenn die Temperatur auf einen Wert zwischen 20 °C und 90 °C, vorzugsweise zwischen 30 °C und 70 °C, eingestellt wird.

Die Verweilzeit des Bauxitrückstands im Homogenisier-Behälter kann vorzugsweise 10 bis 120 Minuten betragen, vorzugsweise 15 bis 90 Minuten, mehr bevorzugt 20 bis 70 Minuten. Vorzugsweise wird die Suspension vor der Desagglomeration in Schritt c) für die angegebene Zeitdauer, insbesondere 20 bis 70 Minuten, im oben angegebenen pH-Bereich und/oder Temperaturbereich gehalten. Diese Verweilzeit unterstützt insbesondere die Hydratisierung der einzelnen mineralischen Bestandteile, sodass die einzelnen Teilchen von einer regelmäßigen Hydrathülle umgeben werden.

Vom Homogenisier-Behälter kann die Suspension in mindestens einen Dispergier-Behälter überführt werden, in welchem die Desagglomeration stattfinden kann. Typischerweise findet die Desagglomeration durch den Eintrag von mechanischer Energie statt, um die agglomerierten Partikel in mikroskopisch kleine Einzelteilchen zu separieren. Die gegenseitigen Anziehungskräfte können dabei vorteilhafterweise durch die Einstellung des pH-Werts minimalisiert und dann durch mechanische Energie überwunden werden. Nach der Desagglomeration können die einzelnen Minerale in der Suspension weitgehend voneinander getrennt vorliegen. Ziel der Desagglomeration ist es vereinfacht gesagt, dass jedes einzeln in der Mischung vorkommende Mineralpartikel für sich in derwässrigen Phase schwimmt.

Im Dispergier-Behälter kann abermals der pH-Wert eingestellt werden (zusätzlich oder alternativ zur bereits erfolgten Einstellung im Homogenisier-Behälter).

Wie oben erwähnt, ist es im Rahmen des erfindungsgemäßen Verfahrens bevorzugt, wenn das Desagglomerieren in Schritt c) ohne vorherige Zugabe eines Dispergiermittels erfolgt. Dies erhöht unter anderem die Wirtschaftlichkeit des Prozesses und reduziert gleichzeitig die Umweltbelastung, die umwelttechnisch problematische Dispergiermittel andernfalls verursachen können.

Schritt c) umfasst das zumindest teilweise Desagglomerieren suspendierter Mineralagglomerate in der wässrigen Suspension. Das Desagglomerieren erfolgt vorzugsweise dadurch, dass die Mineralagglomerate hohen Scherkräften ausgesetzt werden. Dies kann durch Kavitation erfolgen, z.B. mithilfe von bei hohen Drehzahlen laufenden Rührorganen, welche speziell geformt sind, um eine Kavitation zu erzielen. Beispielsweise kann ein Zahnscheibensystem eingesetzt werden.

Bevorzugt ist es jedoch, wenn das Desagglomerieren in Schritt c) ohne Erzeugung von Kavitation erfolgt. Wie oben erwähnt hat sich überraschenderweise gezeigt, dass der Eisengehalt der eisenreichen Fraktion noch gesteigert werden kann, wenn das Desagglomerieren ohne Kavitation erfolgt (vgl. Beispiel 4).

Als besonders gut geeignet für das erfindungsgemäße Verfahren hat sich die Verwendung eines Rotor-Stator-Systems, insbesondere eines Inline-Dispergierers, herausgestellt. Ein Inline-Dispergierer hat einerseits den Vorteil, dass keine Kavitation erzeugt wird. Andererseits hat er den weiteren Vorteil, dass er einen schnelleren und ggf. auch kontinuierlichen Prozess ermöglicht. Dadurch kann die Dispergierzeit verkürzt werden, wodurch - ebenfalls unterwartet - ein noch höherer Eisengehalt in der eisenreichen Fraktion erreicht werden kann (vgl. Beispiel 2 und Fig. 1). Gleichzeitig wird auch noch die Gesamtzeit des Verfahrens verkürzt und der Durchsatz erhöht. Im Rahmen der Erfindung ist es daher bevorzugt, wenn das Desagglomerieren in Schritt c) mit einem Inline-Dispergierer erfolgt.

Es hat sich überraschenderweise als vorteilhaft herausgestellt, wenn das Desagglomerieren in Schritt c) für eine Gesamtdauer von weniger als 120 Minuten, vorzugsweise weniger als 90 Minuten, mehr bevorzugt weniger als 60 Minuten, mehr bevorzugt weniger als 45 Minuten, mehr bevorzugt weniger als 30 Minuten, mehr bevorzugt weniger als 20 Minuten erfolgt. Im Rahmen der Erfindung hat sich gezeigt, dass eine so kurze Gesamtdauer zu einem noch höheren Eisengehalt in der erhaltenen eisenreichen Fraktion führen kann (vlg. Beispiel 2 und Fig. 1). Es ist daher bevorzugt, wenn das Desagglomerieren in Schritt c) für eine Gesamtdauer im Bereich von 1 bis 120 Minuten, vorzugsweise 2 bis 90 Minuten, mehr bevorzugt 3 bis 60 Minuten, mehr bevorzugt 5 bis 45 Minuten, mehr bevorzugt 7 bis 30 Minuten, mehr bevorzugt 10 bis 20 Minuten erfolgt.

Vorzugsweise wird der wässrigen Suspension wenigstens ein Flockungsmittel zugegeben, vorzugsweise um eine Agglomeration von eisenhaltigen Partikeln zu unterstützen. Das Flockungsmittel kann zugegeben werden, nachdem die Desagglomeration abgeschlossen ist, d.h. nach Abschluss von Schritt c). Alternativ dazu kann das Flockungsmittel aber auch schon davor zugegeben werden, z.B. während der Desagglomeration oder auch bereits vor der Desagglomeration, d.h. beispielsweise zwischen den Schritten a) und b) oder zwischen den Schritten b) und c). Vorzugsweise erfolgt die Zugabe vor Schritt d), bevorzugt zwischen den Schritten c) und d).

Ziel in diesem Schritt ist es, die einzelnen Teilchen dazu zu bringen, sich möglichst an gleichartige Teilchen anzulagern und zusammen ein Agglomerat zu bilden, welches sedimentierbar ist und sich beispielsweise aufgrund des Dichteunterschiedes der Teilchen in zeitlicher Abfolge aus der Suspension durch Schwerkraft abtrennen lässt. Vereinfacht gesagt sollen die Eisenpartikel in der Suspension eingefangen und agglomeriert werden.

Vorzugsweise wird das Flockungsmittel in einer Menge im Bereich von 0,05 bis 0,40 Gew.-% bezogen auf den Trockensubstanz-Gehalt der wässrigen Suspension zugegeben.

Wie oben erwähnt, hat sich Stärke als besonders vorteilhaftes Flockungsmittel herausgestellt. Es konnte damit eine erhebliche Verbesserung des Prozesses erreicht werden und sogar ein höherer Eisengehalt in der eisenreichen Fraktion als bei Verwendung deutlich umweltschädlicherer Flockungsmittel wie PCE (vgl. Beispiel 2 und Fig. 1). Vorzugsweise ist das wenigstens eine Flockungsmittel daher Stärke.

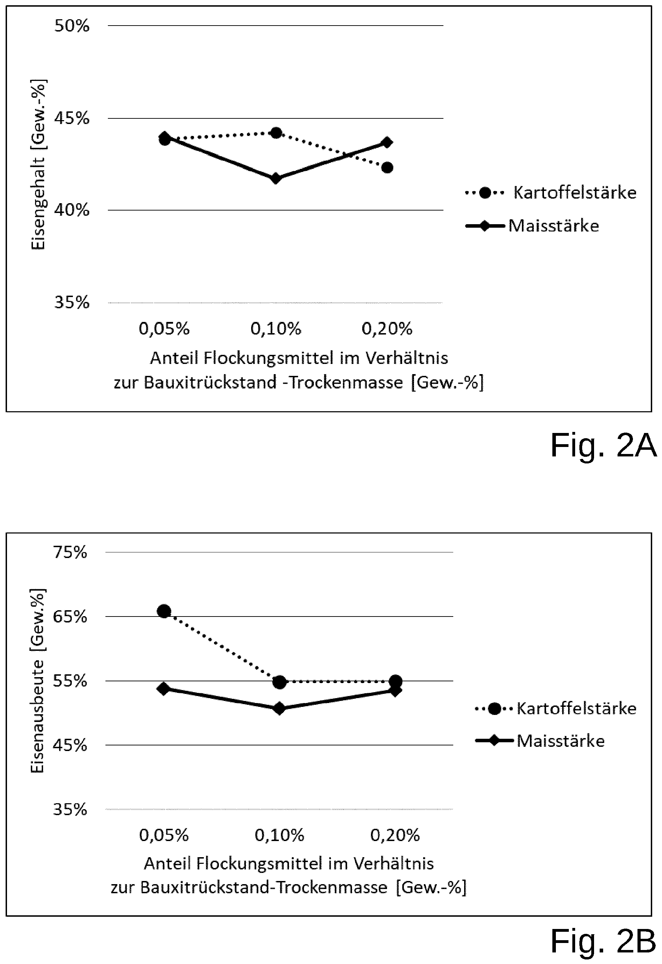

Im Rahmen der Erfindung kann jegliche Art von Stärke eingesetzt werden. Es hat sich allerdings gezeigt, dass Kartoffelstärke gewisse besondere Vorteile hat. So wurde zwar sowohl mit Kartoffel- als auch mit Maisstärke ein exzellenter Eisengehalt in der eisenreichen Fraktion erreicht. Allerdings zeigte sich, dass die Eisenausbeute - d.h. das Verhältnis zwischen der Menge des Eisens in der eisenreichen Fraktion und der Gesamtmenge des Eisens im Ausgangsprodukt Bauxitrückstand - bei der Verwendung von Kartoffelstärke noch einmal höher lag als bei Maisstärke (vgl. Beispiel 3 und Fig. 2B). Kartoffelstärke ist im Rahmen der Erfindung daher besonders bevorzugt.

Zusätzlich, und unabhängig von der Art der eingesetzten Stärke, hat es sich als höchst vorteilhaft erwiesen, aktivierte Stärke als Flockungsmittel einzusetzen. Vorzugsweise handelt es sich dabei um Säure-aktivierte Stärke - d.h. die Stärke ist durch Behandlung mit einer Säure aktiviert. Es hat sich gezeigt, dass aktivierte Stärke den Eisengehalt und die Ausbeute noch verbessern kann. Ohne an eine Theorie gebunden zu sein, vermuten die Erfinder, dass die Aktivierung dazu führt, dass sich die Stärke besser entfaltet und sich noch besser an die Partikel lagern und die Agglomeration beschleunigen kann.

Die Stärke kann mit jeglicher Art von Säure, beispielsweise HCl, aktiviert werden. Als besonders vorteilhaft hat es sich jedoch erwiesen, Zitronensäure für die Aktivierung der Stärke einzusetzen. Dies ist insbesondere dann bevorzugt, wenn dieselbe Säure bereits in Schritt b) für die Einstellung des pH-Werts eingesetzt wurde, da so keine zusätzlichen Stoffe in das Verfahren gebracht werden. Für die Aktivierung kann die Stärke beispielsweise für mindestens 1 Stunde in Zitronensäure (z.B. 5 Gew.-% in Wasser) bei mindestens 50 °C gehalten werden.

Das Flockungsmittel, insbesondere die aktivierte Kartoffelstärke, kann in flüssiger Form über eine Dosierpumpe aus einem Vorratsbehälter zugegeben werden.

In Schritt d) des Verfahrens wird schließlich das Gemisch in eine eisenreiche Fraktion und in wenigstens eine weitere, vorzugsweise silikatreiche Fraktion aufgetrennt.

Die Trennung in diese zwei Fraktionen kann auf Grundlage eines unterschiedlichen spezifischen Gewichts erfolgen, wobei die eisenreiche Fraktion ein niedrigeres spezifisches Gewicht als die silikatreiche Fraktion aufweist. Vorzugsweise erfolgt das Auftrennen in Schritt d) durch selektive Sedimentation, vorzugsweise in einem Sedimentationsbecken. Die Zugabe des Flockungsmittels kann dabei ebenfalls bereits im Sedimentationsbecken erfolgen. Nach der Desagglomeration in Schritt c) kann die Suspension aus dem Dispergier-Behälter in das Sedimentationsbecken geleitet werden. In diesem Becken kann dann eine Agglomeration ähnlicher Teilchen stattfinden und sich unter anderem größere Einheiten an Eisenoxid-Agglomeraten bilden, die aufgrund des höheren spezifischen Gewichts absinken. Am Boden des Sedimentationsbeckens kann das sich absetzende Eisenoxid verdichtet und kontinuierlich über Zellradschleusen bzw. Förderschnecken ausgetragen werden. Am Überlauf des Sedimentationsbeckens kann die weitere, vorzugsweise silikatreiche Fraktion abgeleitet werden.

Die eisenreiche Fraktion kann auch als "schwere Fraktion", als "Eisenoxid-Konzentrat" oder als "Konzentrat von Eisenmineralien" bezeichnet werden. Diese Fraktion ist üblicherweise die Fraktion mit der höchsten Dichte. Sie enthält bevorzugt Eisenmineralien, insbesondere Eisenoxid und Eisenhydroxid. Sie scheidet sich aus der Suspension als erstes ab und kann beispielweise aus dem Abscheider nach Verdichten durch Vibration ausgetragen werden. Die eisenreiche Fraktion kann schließlich für die Wiederverwertung in der Eisenerzeugung eingesetzt werden und bildet so einen wertvollen Rohstoff.

Die weitere, vorzugsweise silikatreiche Fraktion kann auch als "leichte Fraktion" bezeichnet werden. Es kann sich dabei um eine an Eisen abgereicherte Fraktion enthaltend Tonminerale handeln.

In einer bevorzugten Ausführungsform wird die in Schritt d) erhaltene weitere, vorzugsweise silikatreiche Fraktion einer Fest-Flüssig-Trennung zugeführt, vorzugsweise durch Filtration und/oder Zentrifugation, um Prozesswasser abzuscheiden.

Der weiteren, vorzugsweisen silikatreichen Fraktion kann vor der Fest-Flüssig-Trennung Kalziumhydroxid zugegeben werden. Dies kann die Trenn- bzw. Filtrationseigenschaften verbessern.

In einer bevorzugten Ausführungsform wird das aus der weiteren, vorzugsweise silikatreichen Fraktion abgeschiedene Prozesswasser in die Suspension in Schritt a) rückgeführt. Es kann in einen Homogenisier-Behälter eingespeist werden und bei der Homogenisierung von frischem Bauxitrückstand eingesetzt werden.

Sämtliche Prozent-Angaben (%) hierin beziehen sich, wenn nicht anders gekennzeichnet, auf Gewichtsprozent (Gew.-%).

Die vorliegende Erfindung wird durch die folgenden Beispiele und die Figuren illustriert, auf welche sie selbstverständlich nicht eingeschränkt ist.
**Figur 1****:** Vergleich zwischen Stärke und PCE als Flockungsmittel. Gezeigt sind die Ergebnisse bei unterschiedlichen Zeitdauern der Desagglomeration.
**Figur 2****:** Vergleich zwischen Kartoffelstärke und Maisstärke als Flockungsmittel. (A) Eisengehalt im Sediment. (B) Eisenausbeute im Sediment.

### Beispiel 1 - Allgemeine Prozessbeschreibung

Im Folgenden wird eine beispielhafte Ausführungsform des erfindungsgemäßen Verfahrens beschrieben, wie sie auch in den Vergleichsversuchen in den nachfolgenden Beispielen eingesetzt wurde.

### Verwendete Materialien

- Bauxitrückstand (Rotschlamm)
- Zitronensäure (fest, als Anhydrit)
- Leitungswasser
- Flockungsmittel: Polycarboxylatether (PCE), Kartoffelstärke oder Maisstärke

### Prozessablauf

Der Bauxitrückstand wurde mit Wasser aufgeschlämmt und mit einem Zahnscheibe-System oder mit einem Inline Dispergierer gerührt. Die Suspension wurde auf 50 °C aufgeheizt und der pH-Wert wurde durch Zugabe von Zitronensäure auf 9,6 eingestellt.

Das Flockungsmittel wurde vorbereitet. Im Falle von PCE wurde es einfach mit Wasser angerührt. Stärke wurde mit 5 Gew.-% Zitronensäure in Wasser für mindestens 1 Stunde in bei mindestens 50°C aktiviert. Anschließend wurde das Flockungsmittel der Suspension zugegeben und die Drehgeschwindigkeit wurde erhöht, um die Partikel zu zerkleinern. Bei Verwendung des Zahnscheibe-Systems wurde dadurch Kavitation erzeugt. Bei der Verwendung des Inline Dispergierers trat keine Kavitation auf.

Für die Sedimentierung wurden die zerkleinerten Partikel sich absetzen gelassen. Dabei setzten sich eisenhaltige Partikel aufgrund des höheren spezifischen Gewichts schneller ab. Durch Dekantieren wurde die schwere von der leichten Fraktion getrennt.

Die Proben wurden mittels REM analysiert und auf Ihre elementare Zusammensetzung untersucht. Insbesondere wurde der Eisengehalt in der schweren (eisenreichen) Fraktion bestimmt.

### Beispiel 2: Vergleich Stärke vs PCE

Zwei Versuchsreihen wurden durchgeführt, einmal mit PCE und einmal mit Kartoffelstärke als Flockungsmittel. Dabei wurde die Dauer der Desagglomeration variiert. Die Versuche wurden mit Inline Dispergierer durchgeführt, wie in Beispiel 1 beschrieben.

Die Resultate sind in Fig. 1 gezeigt. Es zeigte sich eine deutliche Steigerung des Eisengehalts in der eisenreichen Fraktion durch den Einsatz von Stärke als Flockungsmittel im Vergleich zu PCE.

Zusätzlich zeigten die Resultate, dass der in der eisenreichen Fraktion erzielte Eisengehalt desto höher war, je kürzer die Gesamtdauer der Desagglomeration gehalten wurde.

### Beispiel 3: Vergleich Kartoffelstärke vs Maisstärke

Zum Vergleich von Kartoffelstärke und Maisstärke als Flockungsmittel wurden Versuche mit Zahnscheibe, wie in Beispiel 1 beschrieben, durchgeführt. Die Stärke wurden in Mengen von 0,05 Gew.-%, 0,10 Gew.-% und 0,20 Gew.-%, jeweils bezogen auf die Trockensubstanz des Bauxitrückstands, eingesetzt. Der in der eisenreichen Fraktion erzielte Eisengehalt sowie die Gesamtausbeute wurden bestimmt. Zur Bestimmung der Ausbeute wurde die Gesamtmenge des Eisens, die im eingesetzten Bauxitrückstand vorhanden war, berechnet und mit der Menge Eisen, die am Ende in der eisenreichen Fraktion erhalten wurde, verglichen.

Der Eisengehalt ist in Fig. 2A gezeigt. Kartoffel- und Maisstärke führten dabei zu vergleichbar guten Ergebnissen.

Die erzielte Eisenausbeute ist in Fig. 2B gezeigt. Hier zeigte sich ein deutlicher Vorteil von Kartoffelstärke gegenüber Maisstärke. Bei jeder der drei getesteten Zugabemengen wurde mit Kartoffelstärke eine höhere Ausbeute erzielt als mit Maisstärke. Besonders deutlich war der Unterschied bei 0,05 Gew.-% Stärke, wo für Maisstärke die (sehr gute) Ausbeute von 53,8 % erzielt wurde, für Kartoffelstärke aber die sogar noch deutlich bessere Ausbeute von 65,8 %.

### Beispiel 4: Vergleich Desagglomeration mit vs ohne Kavitation

Um den Einfluss von Kavitation bei der Desagglomeration zu untersuchen, wurden Versuche einmal mit einem Zahnscheiben-System (erzeugt Kavitation) und einmal mit einem Inline Dispergierer (erzeugt keine Kavitation) wie in Beispiel 1 beschrieben durchgeführt. Als Flockungsmittel wurde PCE eingesetzt.

Essenzieller Unterschied der beiden Methoden ist die Art der Energieeintragung. Während bei der Zahnscheibe mit Hilfe von Kavitationseffekten die Dispersion bewirkt wird, verwendet der Inline Dispergierer einen Rotor-Stator Mischer, der über einen engen Spalt mit starken Quetsch- und Querkräften die Körner zerbricht und zerteilt.

Mit beiden Dispergiermethoden wurden jeweils zwei Versuche durchgeführt. Die folgenden Resultate wurden für den Eisengehalt in der eisenreichen Fraktion erhalten:
- Mit Kavitation (Zahnscheibe) wurde ein mittlerer Eisengehalt von 44,2 Gew.-% erzielt (Einzelwerte: 45,3 Gew.-% und 43,1 Gew.-%).
- Ohne Kavitation (Inline Dispergierer) wurde ein mittlerer Eisengehalt von 46 Gew.-% erzielt (Einzelwerte: 45,0 Gew.-%, 47,0 Gew.-%).

## Patentansprüche

1. Verfahren zur Wertstoffgewinnung aus einem Bauxitrückstand, das Verfahren umfassend die folgenden Schritte:
a) Bereitstellen einer wässrigen Suspension des Bauxitrückstands;
b) Einstellen eines pH-Werts der wässrigen Suspension auf einen Wert zwischen 7,2 und 12,2;
c) zumindest teilweises Desagglomerieren suspendierter Mineralagglomerate des Bauxitrückstands; und
d) Auftrennen des resultierenden Gemischs in eine eisenreiche Fraktion und in wenigstens eine weitere, vorzugsweise silikatreiche Fraktion,
wobei der wässrigen Suspension wenigstens ein Flockungsmittel zugegeben wird, wobei das wenigstens eine Flockungsmittel Stärke umfasst.

2. Das Verfahren gemäß Anspruch 1, wobei der pH-Wert in Schritt b) durch Zugabe von Zitronensäure eingestellt wird.

3. Das Verfahren gemäß einem der vorstehenden Ansprüche, wobei die Säure in einer Menge im Bereich von 0,25 bis 2 Gew.-% bezogen auf den Trockensubstanz-Gehalt der wässrigen Suspension zugegeben wird.

4. Das Verfahren gemäß einem der vorstehenden Ansprüche, wobei in Schritt b) die Temperatur der Suspension auf einen Wert zwischen 30 °C und 70 °C eingestellt wird.

5. Das Verfahren gemäß einem der vorstehenden Ansprüche, wobei das Desagglomerieren in Schritt c) ohne vorherige Zugabe eines Dispergiermittels erfolgt.

6. Das Verfahren gemäß einem der vorstehenden Ansprüche, wobei das Desagglomerieren in Schritt c) ohne Erzeugung von Kavitation erfolgt.

7. Das Verfahren gemäß einem der vorstehenden Ansprüche, wobei das Desagglomerieren in Schritt c) mit einem Inline-Dispergierer erfolgt.

8. Das Verfahren gemäß einem der vorstehenden Ansprüche, wobei das Desagglomerieren in Schritt c) für eine Gesamtdauer von weniger als 45 Minuten erfolgt.

9. Das Verfahren gemäß einem der vorstehenden Ansprüche, wobei das Flockungsmittel in einer Menge im Bereich von 0,05 bis 0,40 Gew.-% bezogen auf den Trockensubstanz-Gehalt der wässrigen Suspension zugegeben wird.

10. Das Verfahren gemäß einem der vorstehenden Ansprüche, wobei die Stärke Kartoffelstärke ist.

11. Das Verfahren gemäß einem der vorstehenden Ansprüche, wobei die Stärke eine aktivierte Stärke ist.

12. Das Verfahren gemäß einem der vorstehenden Ansprüche, wobei das Auftrennen in Schritt d) durch selektive Sedimentation erfolgt.

13. Das Verfahren gemäß einem der vorstehenden Ansprüche, wobei die in Schritt d) erhaltene weitere, vorzugsweise silikatreiche Fraktion einer Fest-Flüssig-Trennung zugeführt wird, um Prozesswasser abzuscheiden.

14. Das Verfahren gemäß einem der vorstehenden Ansprüche, wobei der weiteren, vorzugsweisen silikatreichen Fraktion vor der Fest-Flüssig-Trennung Kalziumhydroxid zugegeben wird.

15. Das Verfahren gemäß einem der vorstehenden Ansprüche, wobei das aus der weiteren, vorzugsweise silikatreichen Fraktion abgeschiedene Prozesswasser in die Suspension in Schritt a) rückgeführt wird.
